# EUROPEAN PATENT APPLICATION

(11) **EP 2 854 011 A2**
(43) Date of publication of application: **01.04.2015**
(21) Application number: 14183441.6
(22) Date of filing: 03.09.2014
(51) Int. Cl.: G06F 3/0488, G06F 17/24

(54) **Paper medium, input device, and computer-readable medium storing computer-readable instructions for input device**

(30) Priority: 17.09.2013 JP 2013191320
(71) Applicant: Brother Kogyo Kabushiki Kaisha, Nagoya, Aichi 467-8561 (JP)
(72) Inventor: Sugimura, Yoshihiko, Nagoya, Aichi 467-8562 (JP)
(74) Representative: Smith, Samuel Leonard

(57) **Abstract**

A mark 71 is provided on forms 121, 122 of a paper medium 100 and includes frames 711 to 713 and information lines 721 to 723. The frames 711 to 713 are rectangular and they are arrayed in the left-right direction. Each one of the information lines 721 to 723 is a line that is associated with a specified information item and that is set at a predetermined angle. The information line 721 is inclined diagonally such that it links the upper left corner and the lower right corner of the frame 711. The information line 722 is inclined diagonally such that it links the lower left corner and the upper right corner of the frame 712. The information line 723 is inclined diagonally such that it links the upper left corner and the midpoint of the right edge of the frame 713.

## Description

### BACKGROUND

The present invention relates to a paper medium, to an input device that is able to convert the path of a writing instrument on the paper medium into electronic data, and to a computer-readable medium that stores computer-readable instructions for the input device.

An input device is known that, in a case where writing has been done on a paper medium that has been placed on a base, converts the path of the movement of the writing instrument into information, in electronic form, on a linear figure that has been written on the paper medium. For example, a writing input device that is described in Japanese Laid-Open Patent Publication No. 2001-147771 is provided with a handwriting input portion and a code reader. A user places a paper medium on a stage of the handwriting input portion. A bar code is carried on the paper medium. The bar code indicates specified information, such as a document name, a page number, a personal computer name, a personal computer IP address, and the like, for example. The bar code on the paper medium that has been placed on the stage is read by the code reader. When the user writes on the paper medium using an electromagnetic pen, the coordinates of the positions where the writing was done on the paper medium are detected by the handwriting input portion. Revision data indicated by the detected writing positions are appended to document data for the page number that is indicated by the bar code, for example.

### SUMMARY

A method is conceivable by which a frame, for example, that corresponds to the specified information is printed on the paper medium, instead of the bar code being provided on the paper medium. With this method, in a case where the user has filled in the frame to designate the specified information, the specified information is specified based on the position that has been filled in. However, because this method requires the user to fill in the entire frame in order to specify the specified information, it requires considerable effort by the user in some cases.

Embodiments of the broad principles derived herein provide a paper medium, an input device, and a computer-readable medium that stores computer-readable instructions for the input device, the paper medium, the input device, and the computer-readable medium being able to reduce the effort that is required of the user when the user designates the specified information.

An input device according to the present invention includes a stroke data acquisition means, an angle acquisition means, an angle determination means, a storage means, and a specification means. The stroke data acquisition means is adapted to acquire stroke data. The stroke data indicate a path of a writing means for writing in a case where the writing means has written on a form. The path has been detected by a detection portion. The detection portion is provided in a placement portion on which a paper medium has been placed. The paper medium includes the form and at least one information line. The at least one information line is provided on the form, corresponds to a specified information item that pertains to the form, and is set at a predetermined angle. Based on the stroke data that have been acquired by the stroke data acquisition means, an angle acquisition means is adapted to acquire an angle that the stroke data indicate. Based on the angle that has been acquired by the angle acquisition means, an angle determination means is adapted to determine whether the path that the stroke data indicate follows the at least one information line. In association with the specified information item, a storage means is adapted to store an information item. The information item identifies the at least one information line. In a case where the angle determination means has determined that the path that the stroke data indicate follows the at least one information line, by referring to the storage means, a specification means is adapted to specify the specified information item. The specified information item is associated with the information item. The information item identifies the at least one information line that the angle determination means has determined that the path follows.

A computer-readable medium according to the present invention stores a control program that includes computer-readable instructions. When executed on an input device, the computer-readable instructions cause the input device to perform steps including, acquiring stroke data that indicate a path of a writing means for writing in a case where the writing means has written on a form, acquiring, based on the acquired stroke data, an angle that the stroke data indicate, determining, based on the acquired angle, whether the path that the stroke data indicate follows at least one information line, and specifying the specified information item, in a case where it has been determined that the path follows the at least one information line, based on a correspondence relationship between the specified information item and the information item that identifies the at least one information line. The path has been detected by a detection portion provided in a placement portion on which a paper medium has been placed. The paper medium includes the form and at least one information line. The at least one information line is provided on the form, corresponds to a specified information item that pertains to the form, and is set at a predetermined angle. The specified information item is associated with an information item. The information item identifies the at least one information line that it has been determined that the path follows.

With respect to the input device and the computer-readable medium described above, the specified information item that corresponds to the at least one information line is specified simply by the user's writing of the linear figure that follows the at least one information line. Accordingly, the amount of effort that is required of the user in order to designate the specified information item can be reduced from what it would be in a case where the user has to fill in a frame.

A paper medium according to the present invention includes a form and at least one information line. The at least one information line is provided on the form, corresponds to a specified information item that pertains to the form, and is set at a predetermined angle. According to the configuration described above, when designating the specified information item, the user need only write a linear figure that follows the at least one information line. Therefore, the amount of effort that is required of the user in order to designate the specified information item can be reduced from what it would be in a case where the user has to fill in a frame.

In the input device, the angle acquisition means may acquire an angle of a line segment that links a starting point and an ending point that the stroke data indicate. In this case, because the angle acquisition means acquires the angle of the line segment that links the starting point and the ending point, the angle determination means is able to determine that the path that the stroke data indicate follows the at least one information line, even in a case where there is a deviation from the at least one information line between the starting point and the ending point. Accordingly, it is not necessary for the user to use the writing means to write the linear figure precisely along the at least one information line, so the burden on the user is reduced.

With respect to the input device and the paper medium described above, the paper medium may further include at least one frame. The at least one frame is provided on the form. And the at least one information line may be provided inside the at least one frame. In this case, because the at least one information line is provided inside the at least one frame, the at least one information line stands out more than it would in a case where the at least one frame is not provided. Therefore, the user can visually recognize the at least one information line more easily. The user is also able to recognize the angle of the at least one information line while visually comparing at least one information line to the shape of the at least one frame. Therefore, the user can visually recognize the angle of the at least one information line more easily. That makes it possible for the user to write the linear figure along the at least one information line at the desired angle.

With respect to the input device and the paper medium described above, one edge of the form may be affixed to the paper medium, and a plurality of the at least one frame may be arrayed on the form along a direction in which the edge that is affixed to the paper medium extends. In this case, one edge of the form is affixed to the paper medium, so the form is more resistant to shifting in the direction in which the affixed edge extends than in the direction that is orthogonal to the direction in which the affixed edge extends. The plurality of the at least one frame are arrayed along the direction in which the affixed edge extends. Therefore, the possibility that one frame will shift to the position of another frame can be reduced. Accordingly, the possibility can be reduced that a user who tries to write a linear figure along the information line that is located in a certain frame will mistakenly write the linear figure along the information line in another frame.

With respect to the input device and the paper medium described above, a plurality of the at least one information line may be provided inside one of the at least one frame. Each of the at least one information line set at a different angle. In this case, a plurality of the at least one information line are provided for one of the at least one frame. Therefore, the number of lines that form the one of the at least one frame is less than in a case where the number of the at least one frame is not less than the number of the at least one information line, so the user can recognize the positions of the plurality of the at least one information line more easily.

With respect to the input device and the paper medium described above, a combination of at least two of the at least one information line may correspond to a specified information item. The specified information item to which the combination of at least two of the at least one information line corresponds is different from the specified information item to which any one of the at least one information line corresponds. In this case, different specified information items can be expressed by combining two or more of the at least one information line. Accordingly, the space on the form where the at least one information line is located can be made smaller than it would be in a case where the number of the at least one information line is the same as the number of the specified information items.

### BRIEF DESCRIPTION OF THE DRAWINGS

Embodiments will be described below in detail with reference to the accompanying drawings in which:
FIG. 1 is a figure that shows an overview of a handwriting input system 1;
FIG. 2 is a plan view of a reading device 2;
FIG. 3 is a block diagram that shows an electrical configuration of the reading device 2 and a PC 19;
FIG. 4 is a figure that shows forms 121, 122 that are provided with marks 71;
FIG. 5 is a data configuration diagram for a correspondence data table 95;
FIG. 6 is an enlarged partial view of the form 121, which has been placed on a sensor circuit board 8;
FIG. 7 is a flowchart of main processing;
FIG. 8 is an enlarged partial view of the form 121, which has been placed on the sensor circuit board 8, in a state in which a linear figure 78 has been written on the mark 71;
FIG. 9 is a data configuration diagram of a stroke data set 96;
FIG. 10 is a flowchart of recognition processing;
FIG. 11 is a flowchart of partitioning processing;
FIG. 12 is a flowchart of angle determination processing;
FIG. 13 is a figure that shows the forms 121, 122, which are provided with marks 81, according to a modified example;
FIG. 14 is an enlarged partial view of the form 121, which is provided with a mark 91, according to a modified example, in a state in which the form 121 has been placed on the sensor circuit board 8;
FIG. 15 is a figure that shows the forms 121, 122, which are provided with marks 51, according to a modified example; and
FIG. 16 is a figure that shows the forms 121, 122, which are provided with marks 61, according to a modified example.

### DETAILED DESCRIPTION

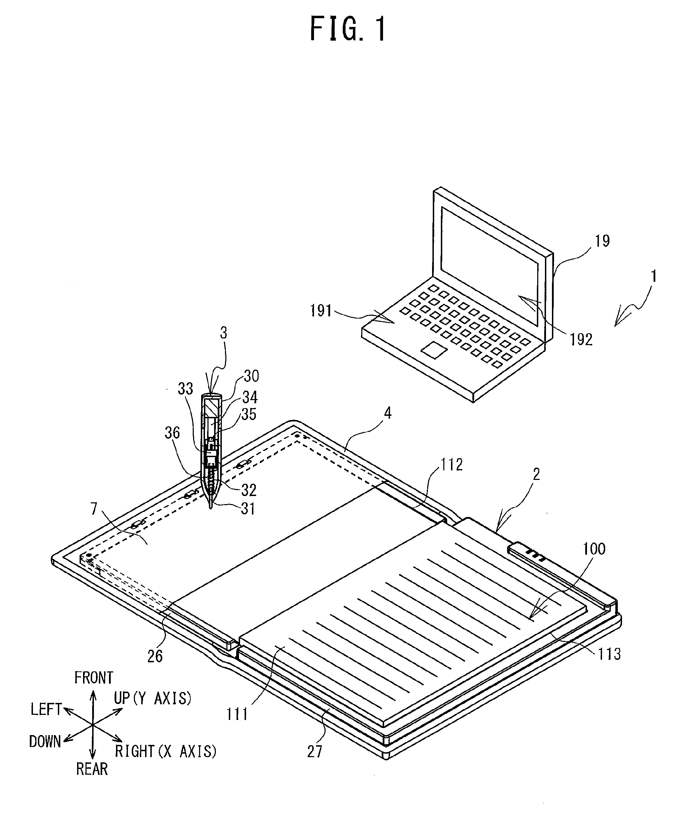

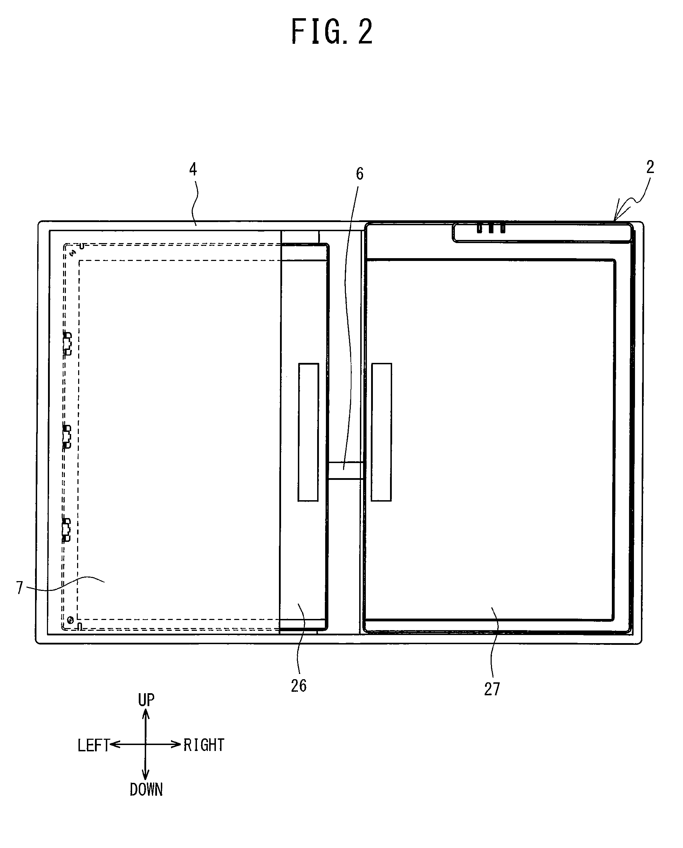

Hereinafter, an embodiment of the present invention will be explained with reference to the drawings. Note that the drawings are used for explaining technological features that the present invention can utilize. Accordingly, device configurations, flowcharts for various types of processing, and the like that are shown in the drawings are merely explanatory examples and do not serve to restrict the present invention to those configurations, flowcharts, and the like, unless otherwise indicated specifically. An overview of a handwriting input system 1 according to the present embodiment will be explained with reference to FIGS. 1 and 2. In the explanation that follows, the upper left side, the lower right side, the top side, the bottom side, the upper right side, and the lower left side in FIG. 1 will be explained as respectively defining the left side, the right side, the front side, the rear side, the top side, and the bottom side of a reading device 2. The left-right axis and the up-down axis of the reading device 2 will be explained as respectively defining an X axis and a Y axis.

As shown in FIG. 1, the handwriting input system 1 is mainly provided with the reading device 2, an electronic pen 3, a PC 19, and the like. The reading device 2 is a thin, lightweight handwriting input device that can be folded up and carried. In the handwriting input system 1, a user uses the electronic pen 3 to write a linear figure on a form 111 of a paper medium 100 that is fixed in place on the reading device 2. The linear figure may be any one of a line, a text character, a numeric character, a symbol, a pictorial figure, and the like. The reading device 2 detects the position of the electronic pen 3. Based on a plurality of the positions of the electronic pen 3 that have been detected over time, the reading device 2 specifies the path of the electronic pen 3. Based on data about the path of the electronic pen 3 that has been specified by the reading device 2, the PC 19 creates and stores an image file in which the linear figure that has been written on the form 111 is converted into electronic form. Hereinafter, the data about the path of the electronic pen 3 that has been specified by the reading device 2 will be called the stroke data.

As shown in FIG. 2, the reading device 2 is mainly provided with a left reading device 26 and a right reading device 27 that form a left-right pair, a flat cable 6, and a cover 4. The left reading device 26 and the right reading device 27 are shaped as thin rectangular plates, and they are disposed such that they can form left and right facing pages on the front face of the cover 4. The left reading device 26 and the right reading device 27 are electrically connected by the flat cable 6. The cover 4 is provided with a pouch portion 7 on its left side. The left reading device 26 is removably mounted in the cover 4 by being inserted into the pouch portion 7. The right reading device 27 is affixed to the right front face of the cover 4 by double-sided tape, an adhesive resin film, or the like.

The paper medium 100 is removably mounted on the front face of the reading device 2. As shown in FIG. 1, the paper medium 100 has a booklet shape that can be opened into left and right facing pages. In the paper medium 100, a pair of covers (a front cover 112 and a back cover 113) and a plurality of the forms 111 are bound along portions of their respective edges. For example, the paper medium 100 may be an A5 size notebook. A format that indicates the layout and the like of a preprinted pattern on the form 111 may differ according to the type of the paper medium 100 or according to the page of the form 111. The paper medium 100 is mounted on the reading device 2 such that the front cover 112 is placed on the top face of the left reading device 26 and the back cover 113 is placed on the top face of the right reading device 27. In the present embodiment, the paper medium 100 is mounted in a state in which its position on the reading device 2 is fixed by double-sided tape, an adhesive resin film, or the like. The user can use the electronic pen 3 to write a linear figure on the form 111 of the paper medium 100.

The electronic pen 3 is a known electromagnetic induction type of electronic pen and is mainly provided with a cylindrical body 30, a core 31, a coil 32, a variable capacitance capacitor 33, a circuit board 34, a capacitor 35, and an ink storage portion 36. The cylindrical body 30 has a circular cylindrical shape, and it contains in its interior a portion of the core 31, the coil 32, the variable capacitance capacitor 33, the circuit board 34, the capacitor 35, and the ink storage portion 36. The core 31 is provided in the tip portion of the electronic pen 3 (the lower end in FIG. 1). The core 31 is energized toward the tip of the electronic pen 3 by an elastic member that is not shown in the drawings. The tip portion of the core 31 protrudes to the outside of the cylindrical body 30. The back end of the core 31 (the upper end in FIG. 1) is connected to the ink storage portion 36, within which ink is stored. The ink storage portion 36 supplies the ink to the core 31. When the user uses the electronic pen 3 to write on the form 111, a linear figure is formed by the ink on the form 111.

The coil 32 is held between the core 31 and the variable capacitance capacitor 33 in a state in which it is wound around the ink storage portion 36. The variable capacitance capacitor 33 is fixed in place in the interior of the electronic pen 3 by the circuit board 34. The capacitor 35 is carried on the circuit board 34. The capacitor 35 and the variable capacitance capacitor 33 are connected in parallel with the coil 32 to configure a known resonance (synchronization) circuit.

The PC 19 is a general-purpose notebook type of personal computer. The PC 19 is provided with an input portion 191 and a display 192. The input portion 191 is used for inputting various types of commands. The display 192 displays an image. In the handwriting input system 1, a known information terminal (a tablet PC, a smart phone, or the like) may also be used as the PC 19 instead of the personal computer.

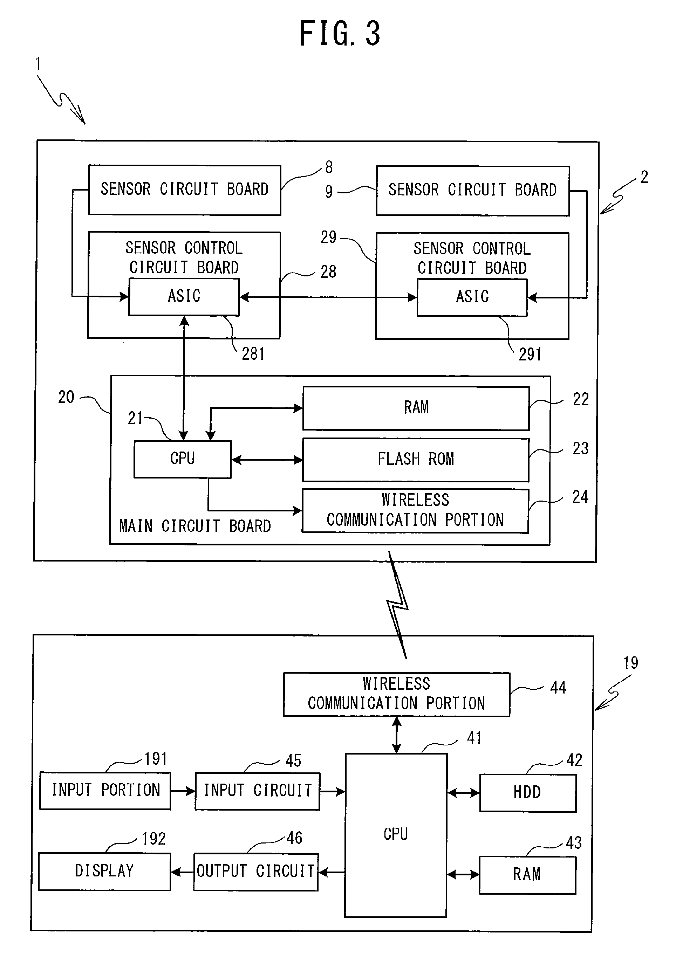

An electrical configuration of the handwriting input system 1 will be explained with reference to FIG. 3. An electrical configuration of the reading device 2 and an overview of the principles by which the reading device 2 acquires the stroke data will be explained first. The reading device 2 is provided with sensor circuit boards 8, 9, a main circuit board 20, and sensor control circuit boards 28, 29. The sensor circuit boards 8, 9 are provided inside the left reading device 26 and the right reading device 27, respectively.

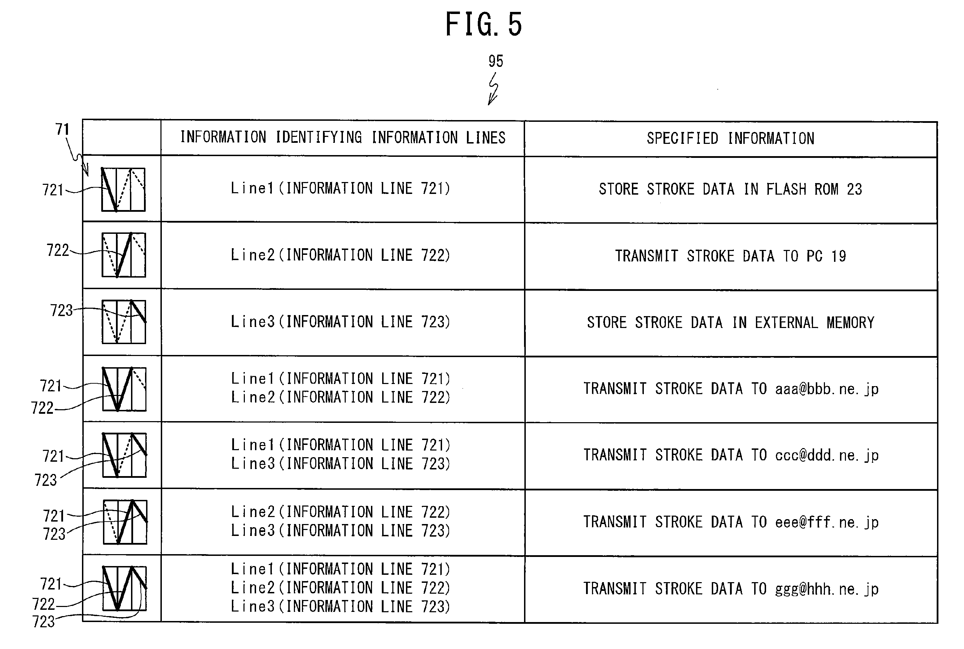

The main circuit board 20 is provided with a CPU 21, a RAM 22, a flash ROM 23, and a wireless communication portion 24. The RAM 22, the flash ROM 23, and the wireless communication portion 24 are electrically connected to the CPU 21. The CPU 21 performs control of the reading device 2. The RAM 22 temporarily stores various types of data such as computation data and the like. Various types of programs that the CPU 21 executes to control the reading device 2 are stored in the flash ROM 23. A correspondence data table 95 (refer to FIG. 5) is also stored in the flash ROM 23. The stroke data and the like are also stored in the flash ROM 23. The wireless communication portion 24 is a controller for performing wireless communication with an external electronic device. Note that in a case where the reading device 2 transmits the stroke data to an e-mail address, the reading device 2 may transmit the stroke data by connecting to a network (not shown in the drawings) through the wireless communication portion 24. The reading device 2 may also transmit the stroke data to the PC 19 and issue a command for the PC 19 to transmit the stroke data to an e-mail address.

In each one of the sensor circuit boards 8, 9, a plurality of long, thin loop coils are arrayed along both an X axis and a Y axis. The sensor circuit board 8 is electrically connected to an ASIC 281 of the sensor control circuit board 28. In a case where a writing operation is performed by the electronic pen 3 on the sensor circuit board 8, the ASIC 281 performs processing that creates the stroke data based on the writing operation. The sensor circuit board 9 is electrically connected to an ASIC 291 of the sensor control circuit board 29. In a case where a writing operation is performed by the electronic pen 3 on the sensor circuit board 9, the ASIC 291 performs processing that creates the stroke data based on the writing operation. The ASIC 281 is the master and is connected directly to the CPU 21, while the ASIC 291 is the slave and is connected to the CPU 21 through the ASIC 281.

The principles by which the stroke data are acquired in a case where a writing operation is performed by the electronic pen 3 on the sensor circuit boards 8, 9 will be explained in general terms. The CPU 21 controls the ASICs 281, 291 such that they cause an electric current of a specific frequency (a sending current for excitation) to flow through each of the loop coils in the corresponding one of the sensor circuit boards 8, 9 one at a time. This causes a magnetic field to be generated by each one of the loop coils in the sensor circuit boards 8, 9. With this state in existence, if the user uses the electronic pen 3 to perform an operation of writing a linear figure on the form 111 of the paper medium 100 that is fixed in place in the reading device 2, for example, the electronic pen 3 will come close to the sensor circuit boards 8, 9. The resonance circuit of the electronic pen 3 therefore resonates due to electromagnetic induction and generates an induced magnetic field.

Next, the CPU 21 controls the ASICs 281, 291 such that they stop the generating of the magnetic fields by the individual loop coils in the sensor circuit boards 8, 9. Each one of the loop coils in the sensor circuit boards 8, 9 receives the induced magnetic field that is generated by the resonance circuit of the electronic pen 3. The CPU 21 controls the ASICs 281, 291 such that they detect signal currents (received currents) that flow through the individual loop coils in the sensor circuit boards 8, 9. By performing this operation for all of the loop coils one at a time, the ASICs 281, 291 detect the position of the electronic pen 3 in the form of coordinate information, based on the received currents.

When the operation of writing a linear figure on the form 111 is being performed using the electronic pen 3, a writing pressure is imparted to the core 31. The inductance in the coil 32 varies according to the writing pressure that is imparted to the core 31. This causes the resonance frequency of the resonance circuit of the electronic pen 3 to vary in accordance with the writing pressure that is imparted to the core 31. The CPU 21 detects the changes (phase changes) in the resonance frequency and specifies the writing pressure that is imparted to the core 31. In other words, the CPU 21 is able to determine, according to the specified writing pressure, whether a state exists in which a linear figure is being written on the form 111 of the paper medium 100. In a case where the CPU 21 has determined that a linear figure is being written on the form 111, the CPU 21 acquires the stroke data that indicate the path of the electronic pen 3 and stores the stroke data in one of the RAM 22 and the flash ROM 23. The stroke data include information on a plurality of sets of coordinates that indicate a plurality of positions on the path of the electronic pen 3.

Next, an electrical configuration of the PC 19 and an overview of processing in a case where the PC 19 has acquired the stroke data from the reading device 2 will be explained. The PC 19 is mainly provided with a CPU 41, a hard disk drive (HDD) 42, a RAM 43, a wireless communication portion 44, an input circuit 45, an output circuit 46, the input portion 191, and the display 192. The CPU 41 performs control of the PC 19. The CPU 41 is electrically connected to the HDD 42, the RAM 43, the wireless communication portion 44, the input circuit 45, and the output circuit 46. Various types of programs that the CPU 41 executes are stored in the HDD 42.

The PC 19 is provided with a media reading device (for example, a CD-ROM drive) that is not shown in the drawings. The PC 19 is able to read a program that is stored in a storage medium (for example, a CD-ROM) with the media reading device and to install the program on the HDD 42. The PC 19 may also receive a program from an external device (not shown in the drawings) that is connected to the PC 19, or from a network, and then install the program on the HDD 42.

The RAM 43 stores various types of data temporarily. The wireless communication portion 44 is a controller for performing wireless communication with an external electronic device. The input circuit 45 performs control that sends commands to the CPU 41 from the input portion 191 (for example, a mouse, a keyboard, a touch panel, or the like). The output circuit 46 performs control that displays an image on the display 192 in response to a command from the CPU 41.

The CPU 41 performs near field communication with the reading device 2 through the wireless communication portion 44. The stroke data that are stored in the flash ROM 23 of the reading device 2 are transmitted from the reading device 2 to the PC 19. The CPU 41 takes the stroke data that have been transmitted from the reading device 2 and stores them in one of the RAM 43 and the HDD 42. The communication in a case where the stroke data are transmitted from the reading device 2 to the PC 19 is not limited to being wireless communication, and it may also be wired communication.

The CPU 41 is able to specify a character string based on the stroke data that are stored in one of the RAM 43 and the HDD 42. When specifying the character string, the CPU 41 performs optical character recognition (OCR) processing.

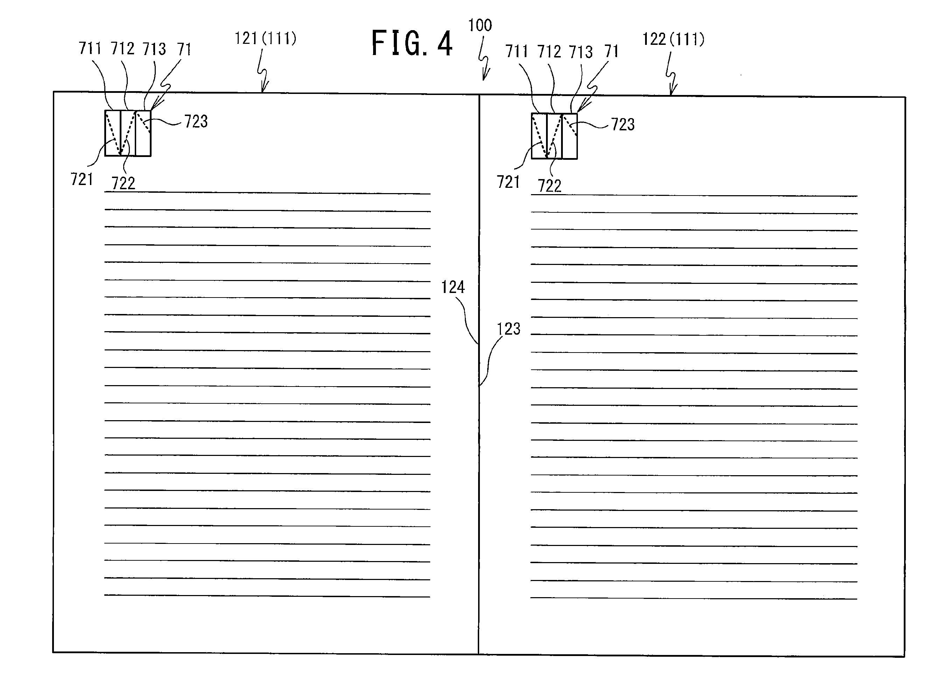

Forms 121, 122, which are examples of the form 111, will be explained with reference to FIG. 4. The forms 121, 122 are examples of the form 111, and they are forms for writing memos. In the explanation that follows, the top side, the bottom side, the left side, and the right side in FIG. 4 will be explained as respectively defining the top side, the bottom side, the left side, and the right side of the forms 121, 122. The form 121 is the form on the left page of the two facing pages of the paper medium 100, and the form 122 is the form on the right page. An edge 123 on the right side of the form 121 is affixed to the paper medium 100 by being bound. An edge 124 on the left side of the form 122 is affixed to the paper medium 100 by being bound.

As shown in FIG. 4, a mark 71 is provided in the upper left portion of each of the forms 121, 122. The mark 71 is provided with three frames 711, 712, 713 and three information lines 721, 722, 723. The frames 711 to 713 are printed as solid lines on the forms 121, 122, and the information lines 721 to 723 are printed as broken lines on the forms 121, 122. Each one of the frames 711 to 713 is rectangular, with its long axis extending in the up-down direction. Each one of the information lines 721 to 723 is a line that is set at a predetermined angle and that corresponds to an item of specified information (described later). Combinations of two or more of the information lines 721 to 723 correspond to items of the specified information that are different from the items of the specified information to which the individual information lines 721 to 723 correspond. The relationships between the information lines 721 to 723 and the items of the specified information will be described later with reference to FIG. 5. Note that in the present embodiment, the angles of the information lines 721 to 723 may be angles in relation to a horizontal line that extends from left to right. The angles of the information lines 721 to 723 may also be the slopes of line segments of the information lines 721 to 723 when a coordinate in the left-right direction is an X coordinate and a coordinate in the up-down direction is a Y coordinate.

The information lines 721 to 723 are respectively provided within the frames 711 to 713. The angles of the information lines 721 to 723 differ from one another. The information line 721 is inclined diagonally in relation to the left-right direction such that it links the upper left corner and the lower right corner of the frame 711. The information line 722 is inclined diagonally in relation to the left-right direction such that it links the lower left corner and the upper right corner of the frame 712. The information line 723 is inclined diagonally in relation to the left-right direction such that it links the upper left corner and the midpoint of the right edge of the frame 713.

The correspondence data table 95 will be explained with reference to FIG. 5. The correspondence data table 95 is stored in the flash ROM 23. The items of the specified information are stored in the correspondence data table 95 in association with information that indicates the information lines. Note that the correspondence data table 95 also includes the marks 71, in each of which a linear figure is drawn in the form of a solid line for at least one of the information lines 721 to 723. However, the marks 71 are shown for explanatory purposes, and the marks 71 do not actually need to be recorded in the correspondence data table 95.

Variables Line1, Line2, Line3 indicate information that pertains to the information lines 721, 722, 723, respectively. The variable Line1 corresponds to the specified information item "Store stroke data in flash ROM 23." The variable Line2 corresponds to the specified information item "Transmit stroke data to PC 19." The variable Line3 corresponds to the specified information item "Store stroke data in external memory." Note that the external memory has been omitted from the drawings.

The combination of the variable Line1 and the variable Line2 corresponds to the specified information item "Transmit stroke data to aaa@bbb.ne.jp." The combination of the variable Line1 and the variable Line3 corresponds to the specified information item "Transmit stroke data to ccc@ddd.ne.jp." The combination of the variable Line2 and the variable Line3 corresponds to the specified information item "Transmit stroke data to eee@fff.ne.jp." The combination of the variable Line1, the variable Line2, and the variable Line3 corresponds to the specified information item "Transmit stroke data to ggg@hhh.ne.jp."

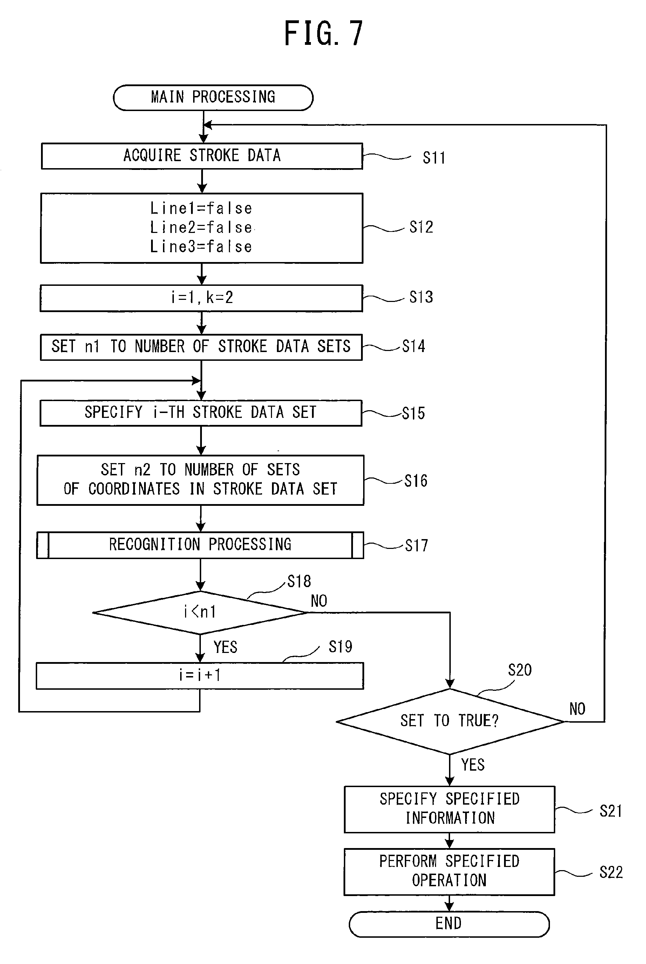

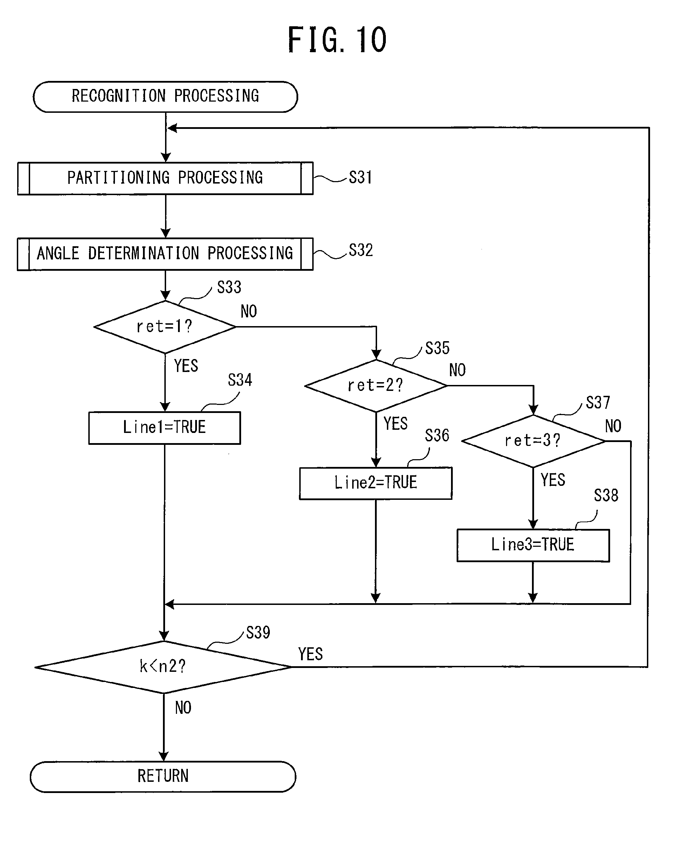

As will be described later, in a case where a linear figure has been drawn along at least one of the information lines 721 to 723, at least one of variables Line1, Line2, Line3 is set to "True" in accordance with the at least one information line where the linear figure has been drawn (refer to Steps S34, S36, and S38 in FIG. 10). The correspondence data table 95 is then referenced, the specified information item that corresponds to the combination of the variables Line1, Line2, Line3 that have been set to "True" is specified (refer to Step S21 in FIG. 7), and an operation is performed based on the specified information item (refer to Step S22 in FIG. 7). In this manner, in a case where a linear figure has been drawn along at least one of the information lines 721 to 723, whose angles are all different, the specified information item is specified, and the corresponding operation is performed. In other words, the angles of the information lines 721 to 723 are set in advance, in correspondence to the specified information items.

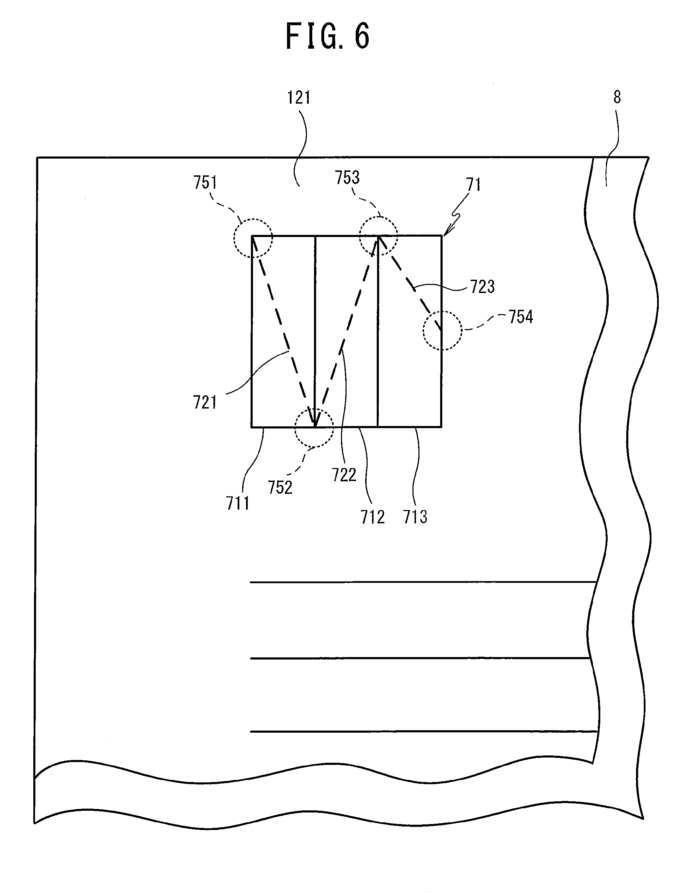

A portion of coordinate information that is stored in the flash ROM 23 in advance will be explained with reference to FIG. 6. Regions 751, 752, 753, 754 are stored in the HDD 42. On the sensor circuit board 8, the region 751 is an assemblage of coordinate information for a circular region of a specified size that is centered on a position that corresponds to the upper left end of the information line 721. On the sensor circuit board 8, the region 752 is an assemblage of coordinate information for a circular region of a specified size that is centered on a position that corresponds to the lower right end of the information line 721 and the lower left end of the information line 722. On the sensor circuit board 8, the region 753 is an assemblage of coordinate information for a circular region of a specified size that is centered on a position that corresponds to the upper right end of the information line 722 and the upper left end of the information line 723. On the sensor circuit board 8, the region 754 is an assemblage of coordinate information for a circular region of a specified size that is centered on a position that corresponds to the lower right end of the information line 723. Note that four regions on the sensor circuit board 9 that are disposed on the form 122 are stored in the flash ROM 23 in the same manner as are the regions 751 to 754, but drawings and explanations have been omitted.

Main processing that is performed by the CPU 21 of the reading device 2 will be explained with reference to FIGS. 7 to 12. When the power supply to the reading device 2 is turned on, the CPU 21 starts the main processing by operating based on a program that is stored in the flash ROM 23.

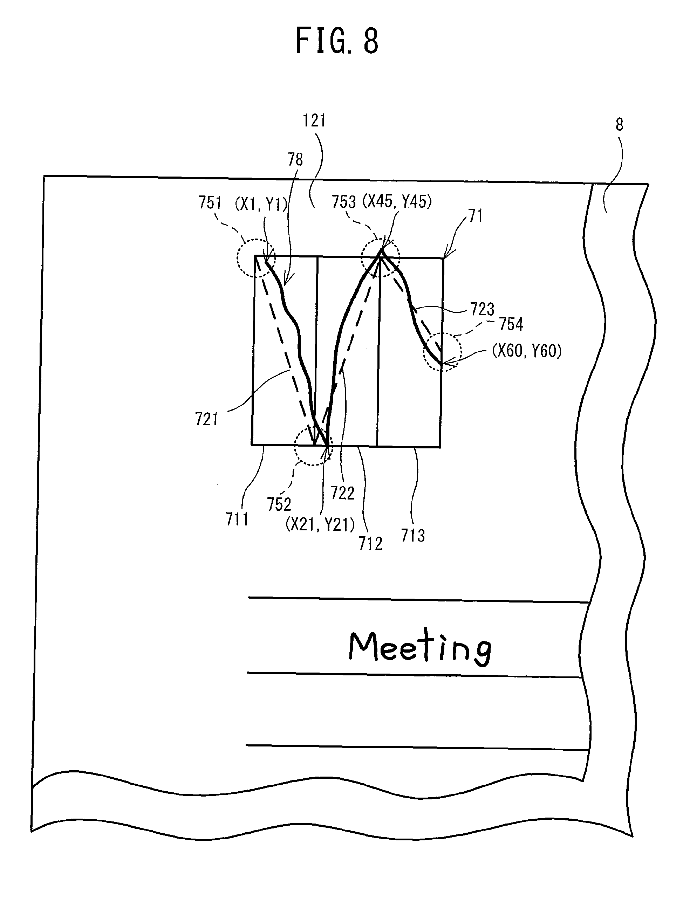

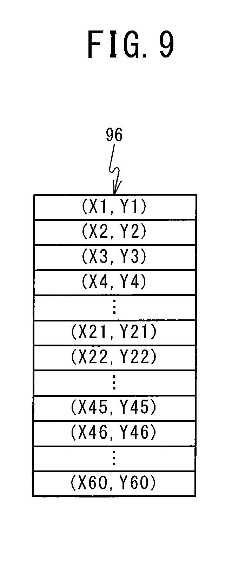

In the explanation that follows, to facilitate the explanation, an example will be explained in which the user has written a linear figure on the form 121. As shown in FIG. 8, using the electronic pen 3, the user has written "Meeting" on the form 121 and has then written a linear figure 78 along the information lines 721 to 723. A stroke data set 96 that is shown in FIG. 9 contains stroke data that are acquired through the sensor circuit board 8 and that indicate the path of the linear figure 78. The stroke data set 96 includes a series of sets of coordinates that follow the linear figure 78. The coordinates (X1, Y1) designate the point where the writing of the linear figure 78 starts (refer to FIG. 8). The coordinates (X21, Y21) designate the point where, after the linear figure 78 has been written to the lower right along the information line 721, the linear figure 78 bends to be written to the upper right along the information line 722 (refer to FIG. 8). The coordinates (X45, Y45) designate the point where, after the linear figure 78 has been written to the upper right along the information line 722, the linear figure 78 bends to be written to the lower right along the information line 723 (refer to FIG. 8). The coordinates (X60, Y60) designate the point where the linear figure 78 ends after being written along the information line 723 to the midpoint of the right edge of the frame 713.

In the main processing, as shown in FIG. 7, the CPU 21 acquires the stroke data (Step S11). The CPU 21 stores the acquired stroke data in the RAM 22. Hereinafter, to facilitate the explanation, a case in which the linear figure 78 (refer to FIG. 8) has been written and the stroke data set 96 have been acquired will be explained first. Note that a case in which the stroke data for "Meeting" are acquired will be explained later.

The CPU 21 sets each one of the variables Line1, Line2, and Line3 to "False" (Step S12). The CPU 21 stores the variables Line1, Line2, and Line3 in the RAM 22. Note that various types of variables that are set in the present embodiment are stored in the RAM 22, although that is not specifically explained in the explanation that follows.

The CPU 21 sets a variable i to "1" and sets a variable k to "2" (Step S13). The CPU 21 sets a variable n1 to the number of the stroke data sets that were acquired at Step S11 (Step S14). In the current example, the linear figure 78 has been written continuously, so the number of the stroke data sets is 1. In this case, the variable n1 is set to "1".

The CPU 21 specifies the i-th stroke data set (Step S15). The CPU 21 sets a variable n2 to the number of sets of coordinates in the stroke data set that was specified at Step S15 (Step S16). In the current example, the stroke data set 96 is the only stroke data set, so the stroke data set 96 is specified as the first stroke data set (Step S 15). The number of sets of coordinates in the stroke data set 96 is 60 (refer to FIG. 9), so the variable n2 is set to "60" (Step S16). Next, the CPU 21 performs recognition processing (refer to FIG. 10) (Step S17).

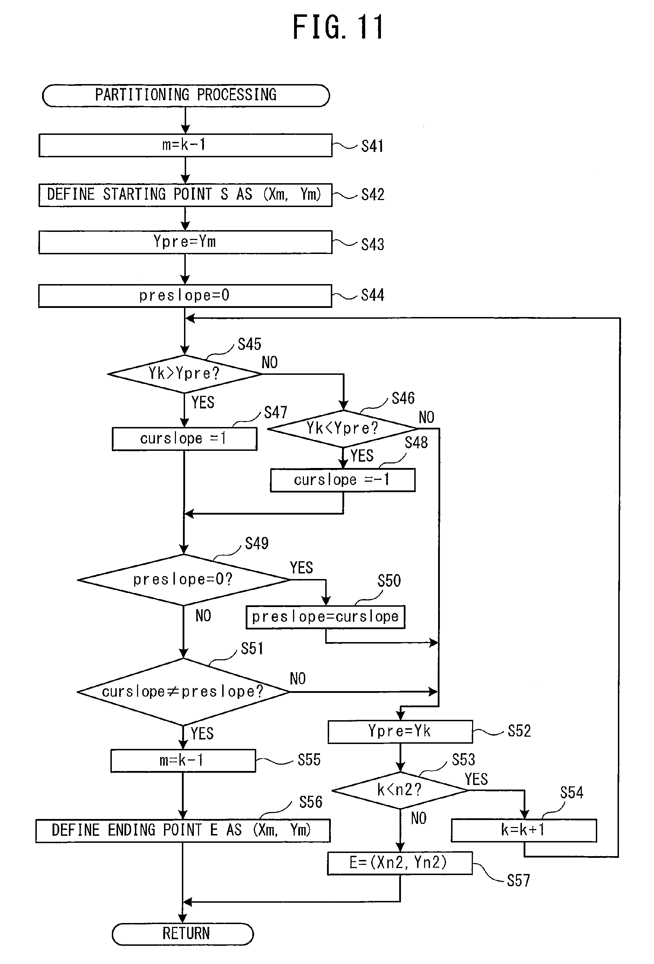

The recognition processing is processing that specifies the information lines, among the information lines 721 to 723, where the user has written a linear figure. As shown in FIG. 10, the CPU 21 performs partitioning processing (Step S31). The partitioning processing will be explained with reference to FIG. 11. The partitioning processing is processing that, based on the linear figure 78 that has been written continuously along the information lines 721 to 723, specifies a starting point S and an ending point E for the path of each individual linear figure that follows one of the information lines 721, 722, 723.

As shown in FIG. 11, the CPU 21 sets a variable m to "k - 1" (Step S41). The CPU 21 defines the starting point S as the m-th set of coordinates (Xm, Ym) in the stroke data set (Step S42). When the processing at Step S42 is performed for the first time, the variable k has been set to "2" (Step S13), and the variable m has been set to "1" (Step S41). Therefore, the starting point S is defined as the first set of coordinates (X1, Y1) in the stroke data set 96.

The CPU 21 sets a variable Ypre to the Y coordinate Ym in the m-th set of coordinates in the stroke data set 96 (Step S43). The CPU 21 sets a variable preslope to zero (Step S44). The CPU 21 determines whether a variable Yk that indicates the value of the Y coordinate is greater than the variable Ypre, which indicates the value of the Y coordinate in the preceding round of the processing (Step S45). In a case where the variable Yk is not greater than the variable Ypre (NO at Step S45), the CPU 21 determines whether the variable Yk is less than the variable Ypre (Step S46). In a case where the variable Yk is not less than the variable Ypre (NO at Step S46), the CPU 21 performs Step S52, which will be described later.

Note that in the present embodiment, the value of the variable Yk is substituted for the variable Ypre at Step S52, which will be described later, the variable k is incremented at Step S54, which will be described later, and Steps S45 and S46 are then repeated. Therefore, the variable Yk becomes the next Y coordinate in the stroke data set 96 after the variable Ypre. Then, by comparing the variable Yk and the variable Ypre, the CPU 21 determines whether the Y coordinate in the stroke data set has moved in a positive direction (toward the top of the paper medium 100), has moved in a negative direction (toward the bottom of the paper medium 100), or has moved along the X axis (to the left or right on the paper medium 100). In the current example, the linear figure 78 (refer to FIG. 8) tracks toward the lower right between Y1 and Y21. Therefore, the variable Yk is less than the variable Ypre. Accordingly, when the processing at Step S46 is performed for the first time, the value "Y2" of the variable Yk is less than the value "Y1" of the variable Ypre, so the determination is made that the variable Yk is less than the variable Ypre (YES at Step S46). The CPU 21 sets a variable curslope, which indicates the slope of the linear figure 78, to "-1" (Step S48).

The CPU 21 determines whether the variable preslope, which indicates the slope of the linear figure 78 in the preceding round of the processing, is set to zero. When the processing at Step S49 is performed for the first time, the variable preslope has been set to zero at Step S44. Accordingly, the determination is made that the variable preslope is set to zero (YES at Step S49), and the CPU 21 substitutes the value of the variable curslope for the variable preslope (Step S50). In the current example, the variable curslope is set to "-1".

Next, in order to perform the processing for the next set of coordinates in the stroke data set, the CPU 21 substitutes the value of the variable Yk for the variable Ypre (Step S52). The CPU 21 determines whether the variable k is less than the variable n2, that is, determines whether the processing has been completed for all of the sets of coordinates (Step S53). In a case where the variable k is less than the variable n2, that is, the processing has not been completed for all of the sets of coordinates (YES at Step S53), the CPU 21 increments the variable k (Step S54) and returns the processing to Step S45.

In the current example, the variable k is set to "3" (Step S54). Then the determination is made that the variable Yk "Y3" is less than the variable Ypre "Y2" (YES at Step S46), and the variable curslope is set to "-1" (Step S48). Then the determination is made that the variable preslope is not zero (NO at Step S49).

The CPU 21 determines whether the variable curslope is not equal to the variable preslope (Step S51). In a case where the variable curslope is equal to the variable preslope (NO at Step S51), the CPU 21 performs the processing at Step S52. The processing sequence of NO at Step S45, YES at Step S46, Step S48, NO at Step S49, and Steps S51 to S54 is repeated until the set of coordinates along the information line 721 in the linear figure 78 (refer to FIG. 8) becomes (X21, Y21) (that is, until the variable k becomes "21"). When the variable k becomes "22" (Step S54), the determination is made that the variable Yk is greater than the variable Ypre (YES at Step S45), because the coordinate Y22 is located on the path of the linear figure that is written along the information line 722. The CPU 21 sets the variable curslope to "1" (Step S47). In this case, the determination is made that the variable curslope "1" is not equal to the variable preslope "-1" (YES at Step S51), and the CPU 21 sets the variable m to "k-1" (Step S55).

The CPU 21 defines the ending point E as (Xm, Ym). In the current example, the variable m is set to "21" (Step S55), so the ending point E is set to (X21, Y21) (Step S56). The starting point S (X1, Y1) and the ending point E (X21, Y21) of the path of the linear figure that is written along the information line 721 are thus specified (Steps S42 and S56). The CPU 21 terminates the partitioning processing and performs angle determination processing (Step S32), as shown in FIG. 10. The angle determination processing is processing that, for example, by computing the angle of a line segment that links the starting point S and the ending point E that were specified by the partitioning processing (Step S31), specifies the one of the information lines 721 to 723 along which the linear figure is written.

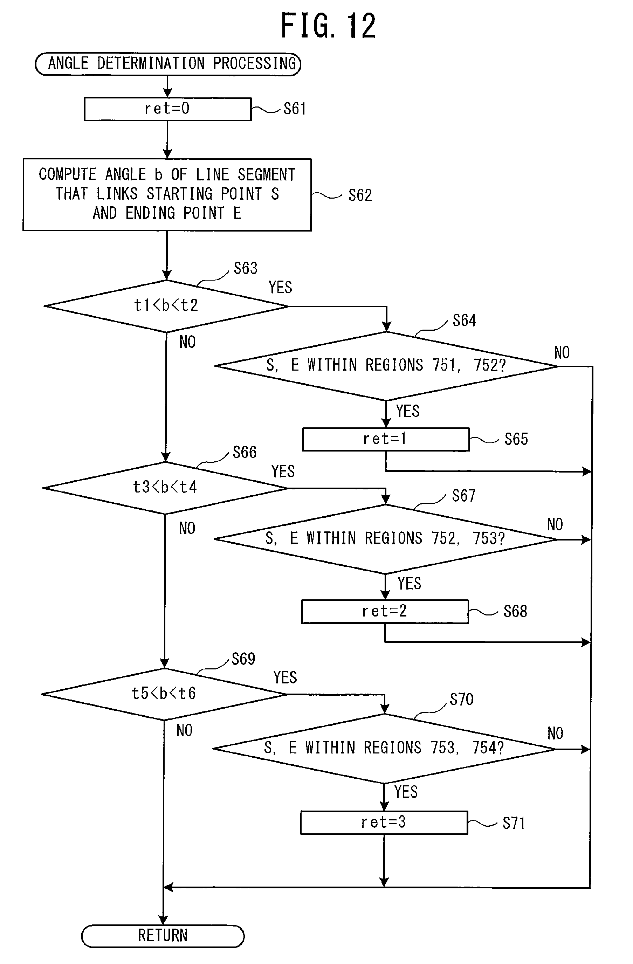

As shown in FIG. 12, the CPU 21 sets a variable ret to zero (Step S61). The CPU 21 computes an angle b of a line segment that links the starting point S and the ending point E (Step S62). Next, the CPU 21 determines whether the angle b that was computed at Step S62 is in the range of being greater than a value t1 and less than a value t2 (Step S63). The values t1 and t2 are stored in the flash ROM 23 in advance, and they are set such that they define the limits of a specified range of angle values, in the center of which range is the angle of the information line 721. Note that the values t1 and t2, as well as values t3 and t4 that will be described later and values t5 and t6 that will be described later, are each set such that the angle ranges whose limits they define do not overlap with one another.

In a case where the angle b is in the range of being greater than the value t1 and less than the value t2 (YES at Step S63), the CPU 21 determines whether one of the starting point S and the ending point E is within the region 751 and whether the other of the starting point S and the ending point E is within the region 752 (Step S64). In a case where at least one of the starting point S and the ending point E is not within the regions 751, 752 (NO at Step S64), the CPU 21 terminates the angle determination processing and performs the processing at Step S33 (refer to FIG. 10), which will be described later.

In the case of the current example, a value of "b1" is computed for the angle b of the line segment that links the starting point S (X1, Y1) and the ending point E (X21, Y21). In this case, the determination is made that the angle b "b1" is in the range of being greater than the value t1 and less than the value t2 (YES at Step S63). Further, the starting point S (X1, Y1) is within the region 751, and the ending point E (X21, Y21) is within the region 752 (refer to FIG. 8). Therefore, one of the starting point S and the ending point E is within the region 751, and the other is within the region 752 (YES at Step S64), so the CPU 21 sets the variable ret to "1" (Step S65). In other words, by performing the processing at Steps S63 and S64, the CPU 21 uses the angle b that was computed at Step S62 to determine whether the path of the linear figure 78 that is indicated by the stroke data set 96 follows the information line 721. Furthermore, if the path of the linear figure 78 does follow the information line 721, the variable ret is set to "1".

Next, the CPU 21 terminates the angle determination processing and, as shown in FIG. 10, determines whether the variable ret is set to "1" (Step S33). In the current example, the variable ret is set to "1" (YES at Step S33), so the CPU 21 sets the variable Line1 to "True" (Step S34). The CPU 21 determines whether the variable k is less than the variable n2 (Step S39). In other words, the CPU 21 determines whether all of the sets of coordinates in the i-th stroke data set that was specified at Step S15 have been checked. In a case where the variable k is less than the variable n2, that is, in a case where not all of the sets of coordinates have been checked (YES at Step S39), the CPU 21 returns the processing to Step S31.

As shown in FIG. 11, in the current example, the variable k is set to "22", so the variable m is set to "21" (Step S41), and the starting point S is set to (X21, Y21) (Step S42). The variable Ypre is set to "Y21" (Step S43). Then the processing at Steps S45 to S54 is repeated. At this time, the determination is made that the variable Yk is greater than the variable Ypre (YES at Step S45), and the variable curslope is set to "1" (Step S47). When the variable k becomes "46", the variable Yk "Y46" becomes less than the variable Ypre "Y45" (YES at Step S46), so the variable curslope is set to "-1" (Step S48). Therefore, the determination is made that the variable curslope "-1" is not equal to the variable preslope "1" (YES at Step S51), and the CPU 21 sets the ending point E to (X45, Y45) (Step S56). Thus the starting point S (X21, Y21) and the ending point E (X45, Y45) of the path of the linear figure that is written along the information line 722 in the linear figure 78 (refer to FIG. 8) are specified.

Next, as shown in FIG. 12, a value of "b2" is computed for the angle b of the line segment that links the starting point S (X21, Y21) and the ending point E (X45, Y45) (Step S62). In this case, the determination is made that the angle b is not in the range of being greater than the value t1 and less than the value t2 (NO at Step S63). The CPU 21 determines whether the angle b "b2" that was computed at Step S62 is in the range of being greater than the value t3 and less than the value t4 (Step S66). The values t3 and t4 are stored in the flash ROM 23 in advance, and they are set such that they define the limits of a specified range of angle values, in the center of which range is the angle of the information line 722.

In a case where the angle b is in the range of being greater than the value t3 and less than the value t4 (YES at Step S66), the CPU 21 determines whether one of the starting point S and the ending point E is within the region 752 and whether the other of the starting point S and the ending point E is within the region 753 (Step S67). In a case where at least one of the starting point S and the ending point E is not within the regions 752, 753 (NO at Step S67), the CPU 21 terminates the angle determination processing and performs the processing at Step S33 (refer to FIG. 10).

In the current example, the determination is made that the angle b "b2" is in the range of being greater than the value t3 and less than the value t4 (YES at Step S66). Further, the starting point S (X21, Y21) is within the region 752, and the ending point E (X45, Y45) is within the region 753 (refer to FIG. 8). Therefore, one of the starting point S and the ending point E is within the region 752, and the other is within the region 753 (YES at Step S67), so the CPU 21 sets the variable ret to "2" (Step S68). In other words, by performing the processing at Steps S66 and S67, the CPU 21 uses the angle b that was computed at Step S62 to determine whether the path of the linear figure 78 that is indicated by the stroke data set 96 follows the information line 722. Furthermore, if the path of the linear figure 78 does follow the information line 722, the variable ret is set to "2".

The CPU 21 terminates the angle determination processing and, as shown in FIG. 10, determines that the variable ret is not set to "1" (NO at Step S33). Next, the CPU 21 determines whether the variable ret is set to "2" (Step S35). In the current example, the determination is made that the variable ret is set to "2" (YES at Step S35), so the CPU 21 sets the variable Line2 to "True" (Step S36). The CPU 21 advances the processing to Step S39.

As shown in FIG. 11, in the current example, the variable k is set to "46", so the variable m is set to "45" (Step S41), and the starting point S is set to (X45, Y45) (Step S42). Then the processing at Steps S45 to S46 is repeated. At this time, the determination is made that the variable Yk is less than the variable Ypre (YES at Step S46), so the variable curslope is set to "-1" (Step S48). When the variable k becomes "60", the determination is made that the variable k "60" is not less than the variable n2 "60" (NO at Step S53). The CPU 21 sets the ending point E to (Xn2, Yn2) (Step S57). In the current example, the ending point E is set to (X60, Y60). Next, the CPU 21 terminates the partitioning processing and advances the processing to Step S32 (refer to FIG. 10).

Next, as shown in FIG. 12, a value of "b3" is computed for the angle b of the line segment that links the starting point S (X45, Y45) and the ending point E (X60, Y60) (refer to FIG. 8) (Step S62). In this case, the determination is made that the angle b is not in the range of being greater than the value t1 and less than the value t2 (NO at Step S63), and the determination is made that the angle b is not in the range of being greater than the value t3 and less than the value t4 (NO at Step S66). The CPU 21 determines whether the angle b that was computed at Step S62 is in the range of being greater than the value t5 and less than the value t6 (Step S69). The values t5 and t6 are stored in the flash ROM 23 in advance, and they are set such that they define the limits of a specified range of angle values, in the center of which range is the angle of the information line 723.

In a case where the angle b is in the range of being greater than the value t5 and less than the value t6 (YES at Step S69), the CPU 21 determines whether one of the starting point S and the ending point E is within the region 753 and whether the other of the starting point S and the ending point E is within the region 754 (Step S70). In a case where at least one of the starting point S and the ending point E is not within the regions 753, 754 (NO at Step S70), the CPU 21 terminates the angle determination processing and performs the processing at Step S33 (refer to FIG. 10).

In the current example, the determination is made that the angle b "b3" is in the range of being greater than the value t5 and less than the value t6 (YES at Step S69). Further, the starting point S (X45, Y45) is within the region 753, and the ending point E (X60, Y60) is within the region 754. Therefore, one of the starting point S and the ending point E is within the region 753, and the other is within the region 754 (YES at Step S70), so the CPU 21 sets the variable ret to "3" (Step S71). In other words, by performing the processing at Steps S69 and S70, the CPU 21 uses the angle b that was computed at Step S62 to determine whether the path of the linear figure 78 that is indicated by the stroke data set 96 follows the information line 723. Furthermore, if the path of the linear figure 78 does follow the information line 723, the variable ret is set to "3".

The CPU 21 terminates the angle determination processing and, as shown in FIG. 10, determines that the variable ret is not set to "1" (NO at Step S33) and determines that the variable ret is not set to "2" (NO at Step S35). Next, the CPU 21 determines whether the variable ret is set to "3" (Step S37). In a case where the variable ret is not set to "3" (NO at Step S37), the CPU 21 advances the processing to Step S39. In the current example, the determination is made that the variable ret is set to "3" (YES at Step S37), so the CPU 21 sets the variable Line3 to "True" (Step S38). The CPU 21 advances the processing to Step S39. The determination is made that the variable k "60" is not less than the variable n2 "60" (NO at Step S39), that is, that all of the sets of coordinates have been processed, so the CPU 21 terminates the recognition processing.

As shown in FIG. 7, the CPU 21 determines whether the variable i is less than the variable n1 (Step S18). In a case where the variable i is less than the variable n1 (YES at Step S18), the CPU 21 increments the variable i (Step S19). Next, the CPU 21 returns the processing to Step S 15. In a case where the variable i is not less than the variable n1 (NO at Step S18), a determination is made as to whether at least one of the variables Line1, Line2, Line3 has been set to "True" (Step S20). In a case where none of the variables Line1, Line2, Line3 has been set to "True" (NO at Step S20), the CPU 21 returns the processing to Step S11.

In a case where at least one of the variables Line1, Line2, Line3 has been set to "True" (YES at Step S20), the CPU 21 refers to the correspondence data table 95 (refer to FIG. 5) and specifies the specified information item that is associated with the combination of the variables Line1, Line2, Line3 that have been set to "True" (Step S21). Next, the CPU 21 performs an operation based on the specified information item that was specified at Step S21 (Step S22). In the current example, all of the variables Line1, Line2, Line3 have been set to "True", so the specified information item "Transmit stroke data to ggg@hhh.ne.jp" is specified (Step S21). The CPU 21 performs the operation that was specified at Step S21 (Step S22). In this manner, the stroke data set that indicates the word "Meeting" is transmitted to the e-mail address ggg@hhh.ne.jp.

Note that the user has written the word "Meeting" prior to writing the linear figure 78 along the information lines 721 to 723. The main processing is performed while the word "Meeting" is being written, but the determinations that are made at Steps S64, S67, S69, and S70 that are shown in FIG. 12 are all NO, so the variable ret is set to zero. Accordingly, the processing at Steps S34, S36, and S38 that are shown in FIG. 10 is not performed, and the specifying of the specified information item at Step S21 that is shown in FIG. 7 is not performed.

Furthermore, in a hypothetical case where a linear figure is drawn only along the information line 722, the performing of the main processing causes the specified information item "Transmit stroke data to PC 19" to be specified (Step S21), such that the stroke data set that indicates the word "Meeting" is transmitted to the PC 19 (Step S22). In other words, by writing a linear figure along at least one of information lines 721 to 723, the user is able to designate the operation that the CPU 21 will be made to perform.

The processing in the present embodiment is performed as described above. In the present embodiment, in order for the user to designate the specified information item, it is sufficient for the user to write only the linear figure along the information lines 721 to 723. Therefore, the amount of effort that is required of the user in order to designate the specified information item can be reduced from what it would be in a case where the user has to fill in the frames 711 to 713.

Furthermore, the information lines 721 to 723 are provided inside the frames 711 to 713. The information lines 721 to 723 therefore stand out more than they would in a case where the frames 711 to 713 are not provided, so the user can visually recognize the information lines 721 to 723 more easily. The user is also able to recognize the angles of the information lines 721 to 723 while visually comparing the information lines 721 to 723 to the shapes of the frames 711 to 713. The user can therefore easily recognize the angles of the information lines 721 to 723 and can write the linear figure along the information lines 721 to 723 at the desired angles.

Moreover, in the present embodiment, as shown in FIG. 5, combinations of two or more of the variables Line1, Line2, Line3 are associated with specified information items that are different from the specified information items with which the individual variables Line1, Line2, Line3 are associated. The variables Line1, Line2, Line3 are respectively associated with the information lines 721, 722, 723. Therefore, combinations of two or more of the information lines 721 to 723 that are provided on the form 121 are associated with specified information items that are different from the specified information items with which the individual information lines 721 to 723 are associated. It is thus possible to express different specified information items by using combinations of two or more of the information lines 721 to 723. Therefore, the space on the form 111 where the information lines 721 to 723 are located can be made smaller than it would be in a case where the number of the information lines that are provided is the same as the number of the specified information items.

The angle b of the line segment that links the starting point S and the ending point E is acquired at Step S62 (refer to FIG. 12). Therefore, even in a case where the path of the linear figure between the starting point S and the ending point E has deviated from the information lines 721 to 723, the determination as to whether the path of the linear figure 78 that the stroke data set 96 indicates follows the information lines 721 to 723 can be determined at Steps S63, S64, S66, S67, S69, and S70. Accordingly, it is not necessary for the user to use the electronic pen 3 to write the linear figure precisely along the information lines 721 to 723, so the burden on the user is reduced.

Note that a linear figure 78 is written in the mark 71 from the upper left end of the information line 721 to the lower right end of the information line 723, following the information lines 721, 722, 723 in that order. However, the linear figure 78 may also be written in the reverse order, that is, from the lower right end of the information line 723 to the upper left end of the information line 721, following the information lines 723, 722, 721 in that order.

In the present embodiment, the reading device 2 is an example of an input device of the present invention.

The CPU 21 that performs the processing at Step S11 is an example of a stroke data acquisition means of the present invention.

The CPU 21 that performs the processing at Step S62 is an example of an angle acquisition means of the present invention.

The CPU 21 that performs the processing at Steps S63, S64, S66, S67, S69, and S70 is an example of an angle determination means of the present invention.

The flash ROM 23 is an example of a storage means of the present invention.

The CPU 21 that performs the processing at Step S21 is an example of a specification means of the present invention.

The electronic pen 3 is an example of a writing means of the present invention.

Note that that present invention is not limited to the in the embodiment that is described above, and modification of the sort described below can be made. For example, the frames 711 to 713 are indicated by solid lines, but the type of the lines is not restricted, and they may also be broken lines. The information lines 721 to 723 are indicated by broken lines, but the type of the lines is not restricted, and they may also be solid lines. It is also acceptable for the frames 711 to 713 not to be provided. The three information lines 721 to 723 are provided, but it is acceptable for any number of the information lines that is not less than one to be provided. The specified information items are also not limited to the items in the present embodiment, and they may also be items about the format of the form 111, such as a schedule format, a memo format, a to do list format, and the like, for example.

Furthermore, because the mark 71 is provided with the frames 711 to 713, another device may also use the frames 711 to 713 to recognize the specified information items. More specifically, instead of recognizing the specified information items based on the angles of a linear figure that is written along the information lines, as in the embodiment that is described above, in a case where the frames 711 to 713 have been filled in, the other device can specify the specified information items based on the positions of the frames that have been filled in. Assume, for example, that the user fills in at least one of the frames 711 to 713. The other device is provided with a camera, and the camera captures an image of the form 121. Based on captured image of the form 121, the other device specifies the position of the frame that has been filled in. The other device refers to a storage device, specifies the specified information item that is associated with the position of the specified frame, and performs an operation.

The unit that performs the main processing is the CPU 21 of the reading device 2, but it may also be the CPU 41 of the PC 19. In that case, the program for performing the main processing and the correspondence data table 95 may be stored in the HDD 42. The specified information items in the correspondence data table 95 may also be changed to items for operations that the CPU 41 will perform. In the present modified example, the reading device 2 transmits the stroke data to the CPU 41 of the PC 19. The CPU 41 receives the stroke data (Step S11 in FIG. 7), then uses the received stroke data in performing the processing. In the present modified example, the PC 19 is an example of the input device of the present invention. The HDD 42 is an example of the storage device of the present invention. The CPU 41 that performs the processing at Step S11 is an example of the stroke data acquisition means of the present invention. The CPU 41 that performs the processing at Step S62 is an example of the angle acquisition means of the present invention. The CPU 41 that performs the processing at Steps S63, S64, S66, S67, S69, and S70 is an example of the angle determination means of the present invention. The CPU 41 that performs the processing at Step S21 is an example of the specification means of the present invention.

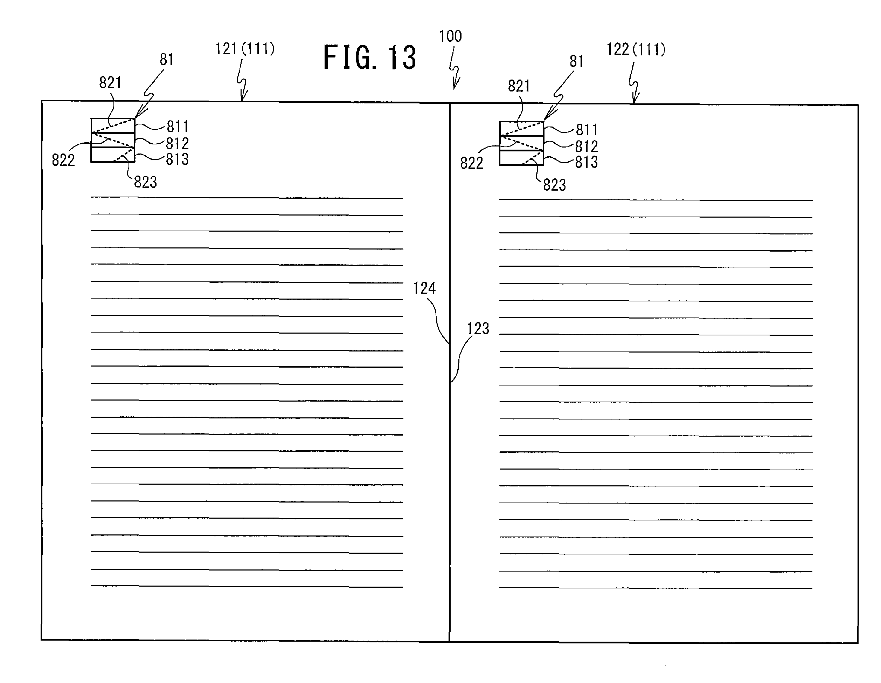

The shape of the mark 71 is not limited. For example, it is acceptable not to provide the frames 711 to 713. The number of the information lines may also be one. A mark 81 that is shown in FIG. 13 may also be used. The mark 81 is provided in the upper left portion of each of the forms 121, 122. The mark 81 is provided with three frames 811, 812, 813 and three information lines 821, 822, 823. Each one of the frames 811 to 813 is rectangular, with its long axis extending in the left-right direction. The frames 811 to 813 are disposed such that they are arrayed in the up-down direction, which is the direction in which the edges 123, 124, which are each affixed to the paper medium 100, extend. Each one of the information lines 821 to 823 is a line that corresponds to one of the specified information items and that is set at a predetermined angle, the angle being different for each one of the information lines 821 to 823. In the same manner as with the information lines 721 to 723, combinations of two or more of the information lines 821 to 823 correspond to specified information items that are different from those to which the individual information lines 821 to 823 correspond, although that is not shown in the drawings.

In a case where the mark 71 that is shown in FIG. 6 is used, in the partitioning processing (FIG. 11), the starting point S and the ending point E are specified by comparing the Y coordinates (the variable Yk and the variable Ypre). However, in a case where the mark 81 that is shown in FIG. 13 is used, the starting point S and the ending point E are specified by comparing the X coordinates. Specifically, a variable Xpre may be set to the value of Xm at Step S43, a variable Xk may be compared to the variable Xpre at Steps S45 and S46, and the variable Xk may be substituted for the variable Xpre at Step S52.

Furthermore, as shown in FIG. 13, the forms 121, 122 are affixed to the paper medium 100 by the binding of the edges 123, 124. Therefore, the forms 121, 122 are more resistant to shifting in the direction in which the affixed edges 123, 124 extend (that is, the up-down direction) than in the direction that is orthogonal to the direction in which the affixed edges 123, 124 extend (that is, the left-right direction). The plurality of the frames 811 to 813 are arrayed along the direction in which the affixed edges 123, 124 extend. Therefore, in a case where the forms 121, 122 have shifted, the possibility that one of the frames 811 to 813 will shift to the position of another frame can be reduced. Accordingly, the possibility can be reduced that a user who tries to write a linear figure along the information line that is located in a certain frame will mistakenly write the linear figure along the information line in another frame. The possibility can also be reduced that the CPU 21 will incorrectly recognize the path of a linear figure that is written along the information line inside one frame as being the path of a linear figure that is written along the information line inside another frame, due to tilting of the one frame such that it shifts to the position of the other frame.

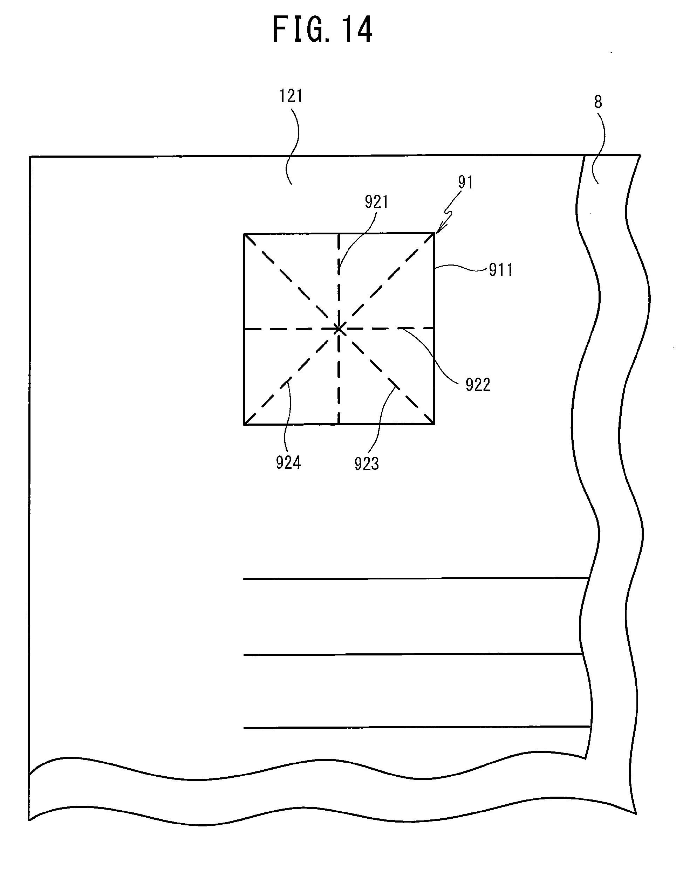

A mark 91 that is shown in FIG. 14 may also be used instead of the mark 71. The mark 91 is shaped like the pattern of the British Union Jack flag. More specifically, the mark 91 is provided with a single rectangular frame 911 that forms the outline of the mark 91 and is also provided with a plurality of information lines 921 to 924 inside the frame 911. The information line 921 is a broken line that links the center of the upper edge of the frame 911 to the center of the lower edge. The information line 922 is a broken line that links the center of the left edge of the frame 911 to the center of the right edge. The information line 923 is a broken line that links the upper left corner of the frame 911 to the lower right corner. The information line 924 is a broken line that links the lower left corner of the frame 911 to the upper right corner. The information lines 921 to 924 intersect one another in the center of the frame 911. In the same manner as the information lines 721 to 723, each one of the information lines 921 to 924 is a line that corresponds to one of the specified information items and that is set at a predetermined angle, the angle being different for each one of the information lines 921 to 924. Combinations of two or more of the information lines 921 to 924 correspond to specified information items that are different from those to which the individual information lines 921 to 924 correspond. By writing a linear figure along one or more of the information lines 921 to 924, the user is able to designate the specified information item.

The mark 91 that is shown in FIG. 14 includes the one frame 911 and the plurality of the information lines 921 to 924. Therefore, the number of lines that form the frame is less than in a case where the number of frames is not less than the number of the information lines, so the user can recognize the positions of the information lines 921 to 924 more easily. Note that with the one frame 911, it is sufficient for the number of the information lines to be a plurality. For example, two, three, five, or more information lines, each with a different angle, may be provided inside the frame 911.

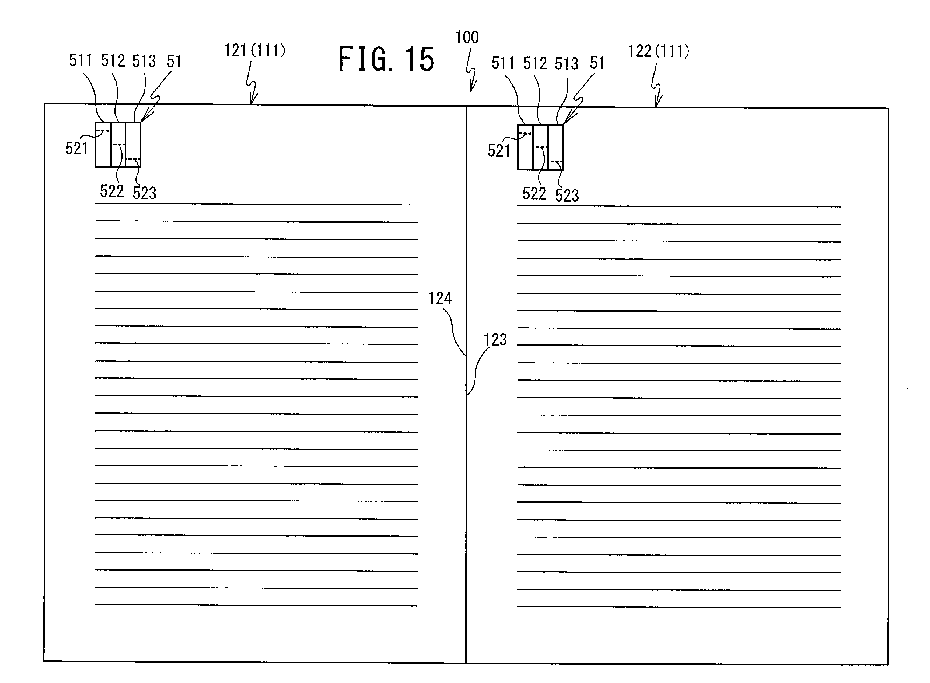

Each one of the information lines 721 to 723 is a line that corresponds to one of the specified information items and that is set at a predetermined angle. However, each one of the information lines may also be a line that corresponds to one of the specified information items and that is provided at a predetermined position, for example. For example, a mark 51 that is shown in FIG. 15 is provided with frames 511 to 513 and with information lines 521 to 523. The shapes and the positional relationships of the frames 511 to 513 are the same as those of the frames 711 to 713 (refer to FIG. 6). Each one of the information lines 521 to 523 is a line that corresponds to one of the specified information items and that is provided at a predetermined position, the position being different for each one of the information lines 521 to 523. More specifically, the information line 521 is positioned inside the upper portion of the frame 511 and extends in the left-right direction. The information line 522 is positioned inside the vertically central portion of the frame 512 and extends in the left-right direction. The information line 523 is positioned inside the lower portion of the frame 513 and extends in the left-right direction. Each one of the information lines 521 to 523 is in a different position in the up-down direction, which is the direction in which the edges 123, 124, which are each affixed to the paper medium 100, extend.

In the same manner as with the information lines 721 to 723, combinations of two or more of the information lines 521 to 523 correspond to specified information items that are different from those to which the individual information lines 521 to 523 correspond, although that is not shown in the drawings. By writing a linear figure along one or more of the information lines 521 to 523, the user is able to designate the specified information item.

In the present modified example, based on the stroke data, the CPU 21 specifies the starting points S and the ending points E of the paths of the linear figures that have been drawn along the corresponding information lines 521 to 523. Then, in the same manner as in the processing at Steps S64, S67, and S70 (refer to FIG. 12), the information lines 521 to 523 that have been designated by the user may be specified by determining whether the specified starting points S and ending points E are within regions at the centers of which are the left and right ends of the corresponding information lines 521 to 523.

Even in the present modified example, the user can designate the specified information item by writing a linear figure along the information lines 521 to 523. Further, as described previously, the forms 121, 122 are more resistant to shifting in the direction in which the edges 123, 124 that are affixed to the paper medium 100 extend (that is, the up-down direction) than in the direction that is orthogonal to the direction in which the affixed edges 123, 124 extend (that is, the left-right direction). Each one of the information lines 521 to 523 is in a different position in the up-down direction, which is the direction in which the affixed edges 123, 124 extend. Therefore, in a case where the forms 121, 122 have shifted, the possibility that one of the information lines 521 to 523 will shift to the position of another information line can be reduced. Accordingly, the possibility can be reduced that a user who tries to write a linear figure along one of the information lines will mistakenly write the linear figure along another of the information lines. The possibility can also be reduced that the CPU 21 will incorrectly recognize the path of a linear figure that is written along one of the information lines as being the path of a linear figure that is written along another of the information lines, due to the shifting of the one information line to the position of the other information line.

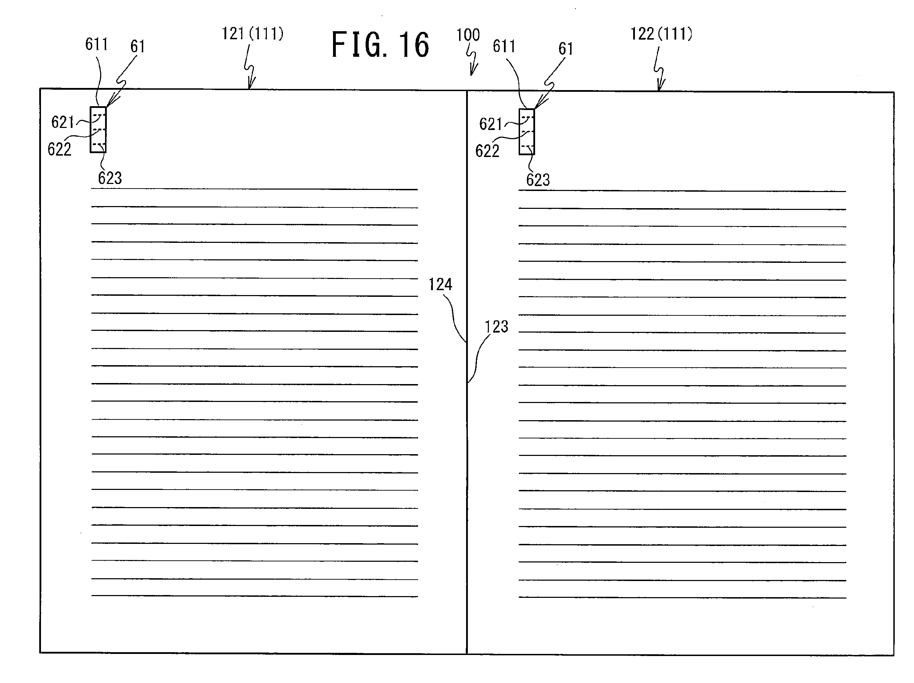

A mark 61 that is shown in FIG. 16 may also be used as a modified example of the mark 51. The mark 61 is provided with a single frame 611 and with information lines 621 to 623. The frame 611 is rectangular, with its long axis extending in the up-down direction. Each one of the information lines 621 to 623 is a broken line that corresponds to one of the specified information items and that is provided at a predetermined position, the position being different for each one of the information lines 621 to 623. More specifically, each one of the information lines 621 to 623 is positioned inside the frame 611 and extends in the left-right direction. Each one of the information lines 621 to 623 is in a different position in the up-down direction, which is the direction in which the edges 123, 124, which are each affixed to the paper medium 100, extend. Even in the present modified example, the same sort of effect can be achieved as with the mark 51.

## Claims

1. An input device (2), comprising:
a stroke data acquisition means (21) for acquiring stroke data that indicate a path of a writing means for writing in a case where the writing means has written on a form (111; 121, 122) and the path has been detected by a detection portion (8, 9) that is provided in a placement portion on which a paper medium (100) has been placed, the paper medium (100) including the form (111; 121, 122) and at least one information line (521 to 523; 621, 622; 721 to 723; 821 to 823; 921 to 924) that is provided on the form (111; 121, 122), that corresponds to a specified information item that pertains to the form (111; 121, 122), and that is set at a predetermined angle;
an angle acquisition means (21) for acquiring, based on the stroke data that have been acquired by the stroke data acquisition means, an angle that the stroke data indicate;
an angle determination means (21) for determining, based on the angle that has been acquired by the angle acquisition means, whether the path that the stroke data indicate follows the at least one information line (521 to 523; 621, 622; 721 to 723; 821 to 823; 921 to 924);
a storage means (23) for storing, in association with the specified information item, an information item that identifies the at least one information line (521 to 523; 621, 622; 721 to 723; 821 to 823; 921 to 924); and
a specification means (21) for specifying, in a case where the angle determination means has determined that the path that the stroke data indicate follows the at least one information line (521 to 523; 621, 622; 721 to 723; 821 to 823; 921 to 924), by referring to the storage means, the specified information item that is associated with the information item that identifies the at least one information line (521 to 523; 621, 622; 721 to 723; 821 to 823; 921 to 924) that the angle determination means has determined that the path follows.

2. The input device (2) according to claim 1, wherein
the angle acquisition means (21) acquires an angle of a line segment that links a starting point and an ending point that the stroke data indicate.

3. The input device (2) according to claim 1 or 2, wherein
the paper medium further includes at least one frame (511 to 513; 611; 711 to 713; 811 to 813; 911) that is provided on the form (111; 121, 122), and
the at least one information line (521 to 523; 621, 622; 721 to 723; 821 to 823; 921 to 924) is provided inside the at least one frame (511 to 513; 611; 711 to 713; 811 to 813; 911).

4. The input device (2) according to claim 3, wherein
one edge (123, 124) of the form (111; 121, 122) is affixed to the paper medium (100), and
a plurality of the at least one frame (811 to 813) are arrayed on the form (111;121, 122) along a direction in which the edge (123, 124) that is affixed to the paper medium (100) extends.

5. The input device (2) according to claim 3, wherein
a plurality of the at least one information line (921 to 924), each set at a different angle, are provided inside one of the at least one frame (911).

6. The input device (2) according to any one of claims 1 to 5, wherein
a combination of at least two of the at least one information line (521 to 523; 621,622; 721 to 723; 821 to 823; 921 to 924) corresponds to a specified information item that is different from the specified information item to which any one of the at least one information line (521 to 523; 621, 622; 721 to 723; 821 to 823; 921 to 924) corresponds.

7. A computer-readable medium that stores a control program that is executable on an input device (2), the program including computer-readable instructions that, when executed, cause the input device to perform the steps of:
acquiring stroke data that indicate a path of a writing means for writing in a case where the writing means has written on a form (111; 121, 122) and the path has been detected by a detection portion (8, 9) that is provided in a placement portion on which a paper medium (100) has been placed, the paper medium (100) including the form (111; 121, 122) and at least one information line (521 to 523; 621, 622; 721 to 723; 821 to 823; 921 to 924) that is provided on the form (111; 121, 122), that corresponds to a specified information item that pertains to the form (111; 121, 122), and that is set at a predetermined angle;
acquiring, based on the acquired stroke data, an angle that the stroke data indicate;
determining, based on the acquired angle, whether the path that the stroke data indicate follows at least one information line (521 to 523; 621, 622; 721 to 723; 821 to 823; 921 to 924); and
specifying, in a case where it has been determined that the path that the stroke data indicate follows the at least one information line (521 to 523; 621, 622; 721 to 723; 821 to 823; 921 to 924), the specified information item that is associated with an information item that identifies the at least one information line (521 to 523; 621, 622; 721 to 723; 821 to 823; 921 to 924) that it has been determined that the path follows, based on a correspondence relationship between the specified information item and the information item that identifies the at least one information line (521 to 523; 621, 622; 721 to 723; 821 to 823; 921 to 924).

8. A paper medium (100) comprising:
a form (111; 121, 122); and
at least one information line (521 to 523; 621, 622; 721 to 723; 821 to 823; 921 to 924) that is provided on the form (111; 121, 122), that corresponds to a specified information item that pertains to the form (111; 121, 122), and that is set at a predetermined angle.

9. The paper medium (100) according to claim 8, further comprising:
at least one frame (511 to 513; 611; 711 to 713; 811 to 813; 911) that is provided on the form (111; 121, 122),
wherein
the at least one information line (521 to 523; 621, 622; 721 to 723; 821 to 823; 921 to 924) is provided inside the at least one frame (511 to 513; 611; 711 to 713; 811 to 813; 911).

10. The paper medium (100) according to claim 9, wherein
one edge (123, 124) of the form (111;121, 122) is affixed to the paper medium (100), and
a plurality of the at least one frame (811 to 813) are arrayed on the form (111;121, 122) along a direction in which the edge (123, 124) that is affixed to the paper medium (100) extends.

11. The paper medium (100) according to claim 9, wherein
a plurality of the at least one information line (921 to 924), each set at a different angle, are provided inside one of the at least one frame (911).

12. The paper medium (100) according to any one of claims 8 to 11, wherein
a combination of at least two of the at least one information line (521 to 523; 621,622; 721 to 723; 821 to 823; 921 to 924) corresponds to a specified information item that is different from the specified information item to which any one of the at least one information line (521 to 523; 621, 622; 721 to 723; 821 to 823; 921 to 924) corresponds.
